# EUROPEAN PATENT SPECIFICATION

(11) **EP 3 597 937 B1**
(45) Date of publication and mention of the grant of the patent: **28.12.2022**
(21) Application number: 18461583.9
(22) Date of filing: 20.07.2018
(51) Int. Cl.: F15B 13/043, F16K 31/06, F16K 31/10

(54) **SERVO VALVE**
SERVOVENTIL
SERVOVANNE

(43) Date of publication of application: 22.01.2020
(73) Proprietor: Hamilton Sundstrand Corporation, Charlotte, NC 28217 (US)
(72) Inventor: Korczynski, Marcin, 54-009 Wroclaw (PL)
(74) Representative: Dehns

(56) References cited:
- EP-A1- 0 235 451
- EP-A1- 3 441 622
- EP-A2- 2 657 459
- WO-A1-2005/108840
- US-A- 3 215 162
- US-A- 3 415 283

## Description

### FIELD

The present disclosure generally relates to a servo valve, and a method for controlling fluid flow in a servo valve.

### BACKGROUND

Servo valves are well-known in the art and can be used to control how much fluid is ported to an actuator. Servo valves include a housing that houses several components in cavities machined therein. Such components are well-known in the art, and include, for instance, fluid nozzles, spool valves, flappers, fluid ports etc. Flappers can move to selectively block and unblock fluid ports.

EP 2657459 discloses a servovalve for controlling a valve actuator including a valving element for selectively blocking a pressure supply line and a pressure vent line. US 3215162 discloses a control valve which can be moved to selectively block outlet ports. US 3415283 discloses a magnetic shunt utilised to selectively block nozzle passages. WO 2005/108840 discloses a flapper pivoted about a central point. EP 0235451 discloses a control valve having a movable valve arm.

### SUMMARY

The present invention provides a servovalve as claimed in claim 1.

The flapper may extend in a direction orthogonal to the conduit.

The flapper may extend through the conduit substantially orthogonal to the longitudinal axis of the conduit such that the longitudinal axis of the flapper is substantially orthogonal to the longitudinal axis of the conduit.

The servovalve may further comprise a first nozzle located in the conduit proximate the flapper such that in the first blocking position, the flapper blocks the conduit by blocking an opening in the nozzle, and in the first open position, the flapper does not block the opening in the nozzle.

The servovalve may further comprise a second fluid supply port in a wall of the conduit; and the actuator may be configured to move the flapper in a direction orthogonal to the longitudinal axis of the flapper between a second blocking position in which it blocks the conduit such that fluid cannot flow from the second fluid supply port to the fluid return port and a second open position in which fluid can flow from the second fluid supply port to the fluid return port.

In the second open position, fluid may be able to flow from both the first and second fluid supply ports to the fluid return port.

The servovalve may further comprise a second nozzle located in the conduit proximate the flapper such that in the second blocking position, the flapper blocks the conduit by blocking an opening in the second nozzle, and in the second open position, the flapper does not block the opening in the second nozzle.

The openings through the first and second nozzles may be coaxial.

The flapper may be arranged between the first and second nozzles.

The first and/or second open position may be located between the first blocking position and the second blocking position. The first and second open position may be the same position.

In the first blocking position, fluid may be able to flow from the second fluid supply port to the fluid return port. Alternatively, in the first blocking position, fluid may also be blocked from flowing from the second fluid supply port to the fluid return port.

In the second blocking position, fluid may be able to flow from the first fluid supply port to the fluid return port. Alternatively, or additionally, in the second blocking position, fluid may be blocked from flowing from the second fluid supply port to the fluid return port.

The flapper has a fixed end fixed to the housing and a free end opposed to the fixed end, and the actuator is configured to act on a portion of the flapper at or proximate the free end so as to move the flapper.

The flapper is configured to block the conduit at a location between the fixed end and the portion of the flapper acted on by the actuator. For example, the location may be approximately equidistant from the fixed end and the portion of the flapper acted on by the actuator. When the force is applied to the flapper, this causes the flapper to bend or deform to move.

Alternatively, the flapper may comprise two opposing fixed ends, and the actuator may act to move the flapper between said fixed ends, such as midway therebetween.

The flapper is bendable along its longitudinal axis.

The flapper is configured to have an equilibrium position and is biased to said equilibrium position.

The flapper may not block the conduit in said equilibrium position.

For example, the flapper may not block the first and/or second nozzles in the equilibrium position.

Said equilibrium position may be the first and/or second open position.

The flapper may be resiliently bendable and when the force from the actuator is removed, the resiliency of the flapper may cause it to return to the equilibrium position, e.g. without any additional forces being provided thereto, such as from any additional elements, i.e. no additional elements such as biasing members may be required.

The actuator may comprise a first solenoid coil and a lever within the coil that is movable by magnetic fields generated by the coil when a current is applied thereto, and said lever may be coupled (e.g. attached or otherwise connected) to the flapper so as to move the flapper when the lever is moved.

The lever is made from a suitable material such that it is movable by the magnetic fields generated by the solenoid coil, such as a ferrous material. The lever may be a core of an electromagnet that comprises the solenoid.

An end of the flapper may be coupled to the lever.

Alternatively, the solenoid coil may generate magnetic fields that attract or repel the flapper directly, i.e. without the lever.

The actuator may further comprise a further solenoid coil, wherein the lever is arranged within the coil so as to be movable by magnetic fields generated by the further solenoid coil when a current is applied thereto so as to move the flapper when the lever is moved.

The second solenoid coil may act as a back-up in the event of failure of the first solenoid coil. The first and second solenoid coils may not act in combination.

Alternatively, the first and second solenoid coils may pull (or push) the lever in opposing directions so as to move the lever and hence flapper in opposing directions.

The current applied to the first and/or solenoid coil may be in a first direction so as to pull the lever, and may be reversed so as push the lever.

The present disclosure also provides a method for controlling fluid flow in a servo valve according to claim 11.

The method may further comprise providing a current to the first solenoid coil to move flapper.

The current may generate a magnetic field in the first solenoid coil, which may move the lever, or may move the flapper directly.

The method may further comprise providing a current to the, or a, second solenoid coil to move the flapper.

The current may generate a magnetic field in the second solenoid coil, which may move a lever, or may move the flapper directly.

### BRIEF DESCRIPTION OF DRAWINGS

Various embodiments will now be described, by way of example only, and with reference to the accompanying drawings in which:
Figure 1 shows a cross-sectional view through a servo valve according to an embodiment of the invention;
Figure 2 shows an exploded perspective view of the servo valve of Figure 1; and
Figure 3 shows a cross-sectional view of the servo valve of Figure 1, showing the fluid ports.

### DETAILED DESCRIPTION

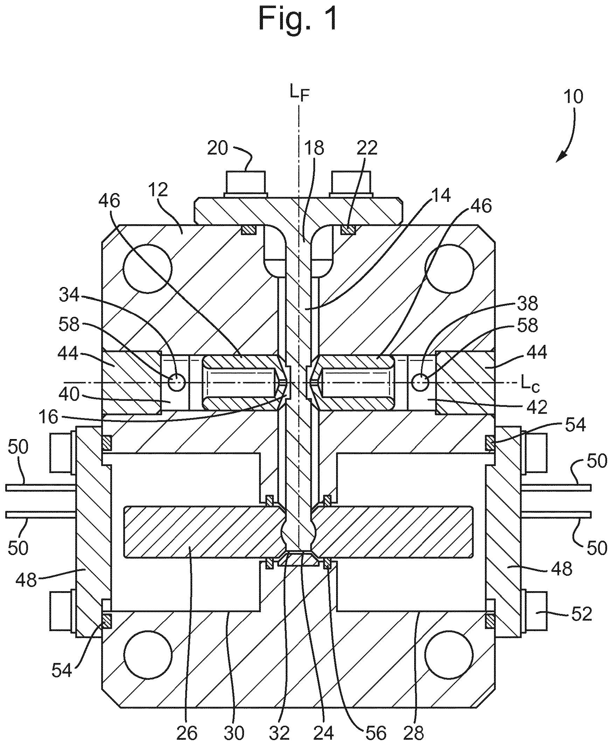

Figure 1 shows a servo valve 10 comprising a housing 12. The servo valve 10 includes an elongated flapper 14 extending through a conduit 16 in the housing. The flapper has a longitudinal axis L_{F}. The conduit may have a longitudinal axis Lc. The longitudinal axis of the flapper L_{F} may be substantially orthogonal to the longitudinal axis of the conduit L_{C}. The flapper 14 has a fixed end 18 fixed to the housing 12, e.g. by screws or bolts 20, and hermetically sealed to the housing 12 at the fixed end 18 by seal 22. The flapper 14 has also a free end 24 opposing the fixed end 18. The free end 24 is operatively connected to a core 26, that is located partially within a solenoid coil 28, by being located within an aperture or recess 32 in the core 26. The core 26 may extend substantially perpendicularly to the flapper 14. As will be described below, the core 26 acts as a lever for moving the flapper 14. The solenoid coil 28 and the core/lever 26 are referred to as an actuator. The flapper 14 moves in a direction substantially orthogonal to the longitudinal axis of the flapper L_{F}.

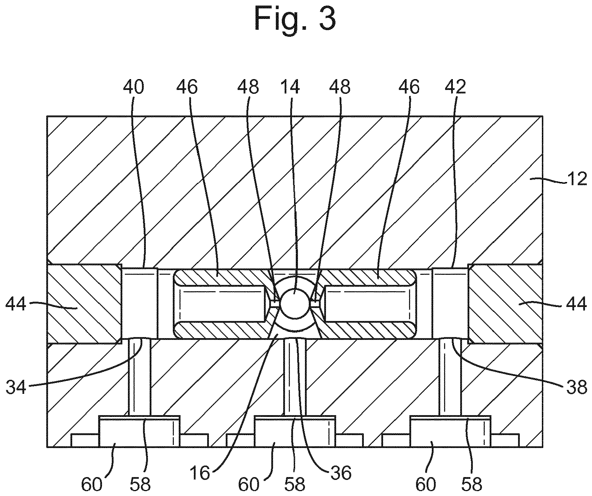

The servo valve 10 also includes at least one port, such as first, second and third ports 34, 36 (see Fig. 3), 38. The first and third ports 34, 38, may be located in fluid communication with the second port 36 and with each other via conduit portions 40,42. The conduit portions 40,42 may be plugged at the edge of the housing 12 by plugs such as lee plugs 44. The conduit portions 40, 42 may also include nozzles 46 having small or narrow openings arranged such that fluid must be communicated between the conduit portions 40, 42 via the openings of the nozzles 46. The second port 36 may be located in the conduit 16 between the nozzles. Blocking an opening in one of the nozzles therefore blocks fluid communication between the various ports 34,36,38.

When no current is applied to the solenoid coil 28, the flapper 14 may be in an initial or open position, wherein it does not block the conduit or nozzle openings. The core/lever 26 may be caused to move by applying a current to the solenoid coil 28. The lever 26 thus applies a force to the flapper 14 in a direction substantially orthogonal to the longitudinal axis of the flapper 14. This causes the flapper 14 to move from its initial (open) position to a first blocking position to block a nozzle opening and thus the conduit portion from the first port (also referred to as first fluid supply port) 34 or second port (also referred to as second fluid supply port) 36 to the third port (also referred to as fluid return port) 38. The flapper 14 bends in order to move to block the opening of a nozzle 46. For example, it may bend proximate to the fixed end. Alternatively, it may bend along its length. When the force is removed, the flapper 14 may return to the initial position. The flapper 14 may be formed from a resiliently bendable material, such that it returns to the initial (open) position without any external forces being applied. Each of the first, second and third ports may be fluid supply or return ports. For example, the first port 34 may a first fluid supply port, the second port 36 may be a second fluid supply port, and the third port 38 may be a fluid return port. It will be understood that any suitable arrangement of ports and conduit portions may be used, including any suitable number of supply and return ports.

The solenoid coil 28 may be secured in place with a cover 48, screws or bolts 52, and hermetic seal 54. The cover 48 may allow electrical connections 50 to pass therethrough to the coil 28.

Seals 56 may be provided in the channel in which the core/lever 26 is located, around the core/lever, e.g. so as to prevent fluid from the ports reaching the solenoids. In combination with the other seals, this provides a hermetically sealed servo valve.

The servo valve 10 may include an additional solenoid coil 30. The core/lever 26 may extend partially through and move within the additional solenoid coil 30. The additional solenoid 30 may be configured to be a back-up solenoid coil in the event of failure of the solenoid coil 28. It may be connected to a separate power supply (not shown).

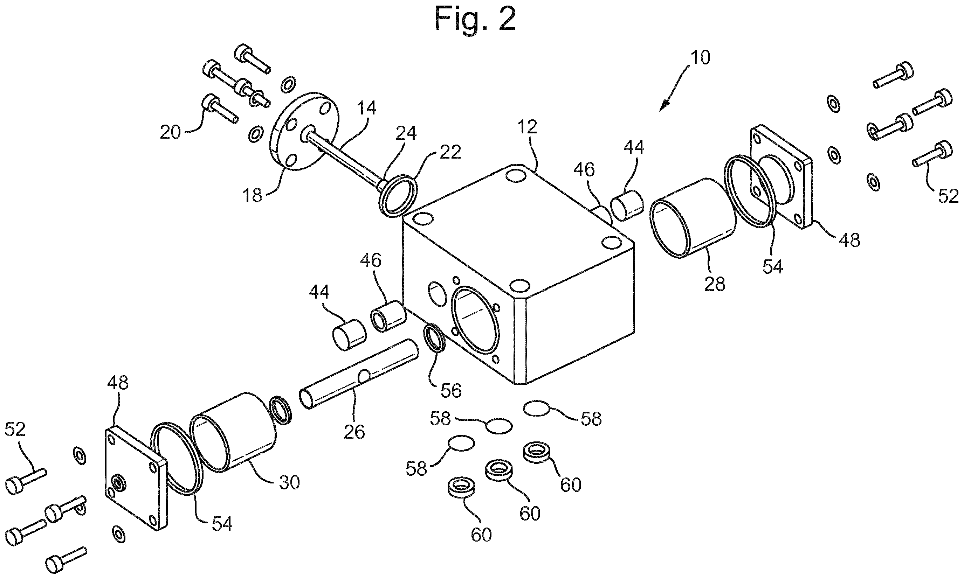

Figure 2 shows an exploded view of the servo valve 10 of Figure 1, so that the components may be seen more clearly. Figure 2 shows filters 58, which may be located over the fluid supply and return ports 34, 36, 38. Screen rings 60 may secure the filters in a fixed position.

Figure 3 shows a cross-sectional view in which the various fluid ports can be seen more easily. In the open position, the flapper 14 may be located between the openings 48 of the nozzles 46 such that both openings are open, and both conduit portions 40, 42 are open (not blocked). When the flapper is moved in the direction orthogonal to the longitudinal axis of the flapper 14 in one direction, it will be moved to a blocking position, wherein it blocks one of the openings 48 and thus blocks the related conduit portion 40,42. The opposing opening 48 and related conduit portion 40,42 will remain open. When the flapper is moved in the other direction, it will instead block the other of the openings 38 and the related conduit portion 40,42. For example, when the first port 34 is a first fluid supply port, the second port 36 is a second fluid supply port, and the third port 38 is a fluid return port, in the
blocking position wherein the flapper 14 blocks the opening 48 related to conduit portion 40, fluid is blocked from flowing from first fluid supply port 34, and allowed to flow between second fluid supply port 36 and fluid return port 38. When the blocking position wherein the flapper 14 blocks the opening 48 related to conduit portion 42, fluid is blocked from flowing to the fluid return port from either the first fluid supply port 34 or the second fluid supply port 36.

The servo valve can be used in any aviation and industrial applications that require high flow of air, such as single stage servo valves, bleed valves, wing anti-ice valves, fuel metering units, and integrated fuel pump controls.

## Claims

1. A servo valve (10) comprising:
a housing (12);
the housing (12) comprising a first fluid supply port (34), a fluid return port (38) and a conduit (16) therebetween
the servo valve (10) further comprising an elongated flapper (14) having a portion arranged in the conduit (16); and
an actuator (26) configured to apply a force to the flapper (14) in a direction orthogonal to a longitudinal axis of the flapper (14) to move the flapper (14) in the direction orthogonal to the longitudinal axis of the flapper between a first blocking position in which it blocks the conduit (16) such that fluid cannot flow from the first fluid supply port (34) to the fluid return port (38) and a first open position in which the conduit (16) is open such that fluid can flow from the first fluid supply port (34) to the fluid return port (38)
wherein the flapper (14) has a fixed end (18) fixed to the housing (12) and a free end (24) opposed to the fixed end (18), and wherein the actuator (26) is configured to act on a portion of the flapper (14) at or proximate the free end (24) so as to move the flapper,
and wherein the flapper (14) is biased to an equilibrium position, wherein the force applied to the flapper (14) causes the flapper to bend to move, **characterised in that** the flapper (14) is configured to block the conduit (16) at a location between the fixed end (18) and the portion of the flapper (14) acted on by the actuator (26).

2. The servo valve (10) of claim 1, wherein the flapper (14) extends through the conduit (16) substantially orthogonal to a longitudinal axis of the conduit (16) such that the longitudinal axis of the flapper (14) is substantially orthogonal to the longitudinal axis of the conduit (16).

3. The servo valve (10) of claim 1 or 2, comprising a first nozzle located in the conduit (16) proximate the flapper (14) such that in the first blocking position, the flapper (14) blocks the conduit (16) by blocking an opening in the first nozzle, and in the first open position, the flapper (14) does not block the opening in the first nozzle.

4. The servo valve (10) of claim 3, comprising a second fluid supply port (36) in a wall of the conduit (16); wherein the actuator (26) is configured to move the flapper (14) in a direction orthogonal to the longitudinal axis of the flapper (14) between a second blocking position in which it blocks the conduit (16) such that fluid cannot flow from the second fluid supply port (36) to the fluid return port (38) and a second open position in which fluid can flow from the second fluid supply port (36) to the fluid return port (38).

5. The servo valve (10) of claim 4, comprising a second nozzle located in the conduit (16) proximate the flapper (14) such that in the second blocking position, the flapper (14) blocks the conduit (16) by blocking an opening in the second nozzle, and in the second open position, the flapper (14) does not block the opening in the second nozzle.

6. The servo valve (10) of claim 5, wherein the flapper (14) is arranged between the first and second nozzles (46).

7. The servo valve (10) of any preceding claim, wherein the flapper (14) does not block the conduit (16) in said equilibrium position.

8. The servo valve (10) of any preceding claim, wherein the actuator (26) comprises a first solenoid coil (28) and a lever within the first solenoid coil (28) that is movable by magnetic fields generated by the first solenoid coil (28) when a current is applied thereto, and wherein said lever is coupled to the flapper (14) so as to apply the force in the direction orthogonal to the longitudinal axis of the flapper (14) to move the flapper (14) when the lever is moved.

9. The servo valve (10) of claim 8, wherein the actuator (26) comprises a further solenoid coil (28), wherein the lever is arranged within the further solenoid coil (28) so as to be movable by magnetic fields generated by the further solenoid coil (28) when a current is applied thereto so as to apply the force in the direction orthogonal to the longitudinal axis of the flapper (14) to move the flapper (14) when the lever is moved.

10. The servo valve (10) of any preceding claim, wherein the flapper (14) is resiliently bendable and when the force from the actuator (26) is removed, the resiliency of the flapper (14) causes the flapper (14) to return to the equilibrium position.

11. A method for controlling fluid flow in a servo valve (10), comprising
providing the servo valve (10) of any preceding claim; and
applying a force to the flapper (14) in a direction orthogonal to the longitudinal axis of the flapper (14) to move the flapper in the direction orthogonal to the longitudinal axis of the flapper (14) between the first blocking position and the first open position.

## Patentansprüche

1. Servoventil (10), umfassend:
ein Gehäuse (12);
wobei das Gehäuse (12) umfasst
einen ersten Fluidzuleitungsanschluss (34), einen Fluidrückleitungsanschluss (38) und eine Leitung (16) dazwischen:
wobei das Servoventil (10) ferner eine längliche Klappe (14) umfasst, die einen in der Leitung (16) angeordneten Abschnitt aufweist; und
ein Stellglied (26), das konfiguriert ist, um eine Kraft auf die Klappe (14) in einer Richtung orthogonal zu einer Längsachse der Klappe (14) auszuüben, um die Klappe (14) in der Richtung orthogonal zu der Längsachse der Klappe zwischen einer ersten Blockierposition, in der sie die Leitung (16) blockiert, sodass Fluid nicht von dem ersten Fluidzuleitungsanschluss (34) zu dem Fluidrückleitungsanschluss (38) strömen kann, und einer ersten offenen Position zu bewegen, in der die Leitung (16) offen ist, sodass Fluid von dem ersten Fluidzuleitungsanschluss (34) zu dem Fluidrückleitungsanschluss (38) strömen kann
wobei die Klappe (14) ein festes Ende (18), das an dem Gehäuse (12) befestigt ist, und ein freies Ende (24) aufweist, das dem festen Ende (18) gegenüberliegt, und wobei das Stellglied (26) so konfiguriert ist, dass es auf einen Abschnitt der Klappe (14) an oder in der Nähe des freien Endes (24) wirkt, um die Klappe zu bewegen,
und wobei die Klappe (14) in eine Gleichgewichtsposition vorgespannt ist,
wobei die auf die Klappe (14) ausgeübte Kraft bewirkt, dass sich die Klappe biegt, um sich zu bewegen, **dadurch gekennzeichnet, dass** die Klappe (14) so konfiguriert ist, dass sie die Leitung (16) an einer Stelle zwischen dem festen Ende (18) und dem Abschnitt der Klappe (14) blockiert, auf die das Stellglied (26) wirkt.

2. Servoventil (10) nach Anspruch 1, wobei sich die Klappe (14) durch die Leitung (16) im Wesentlichen orthogonal zu einer Längsachse der Leitung (16) erstreckt, sodass die Längsachse der Klappe (14) im Wesentlichen orthogonal zu der Längsachse der Leitung (16) verläuft.

3. Servoventil (10) nach Anspruch 1 oder 2, umfassend eine erste Düse, die in der Leitung (16) in der Nähe der Klappe (14) angeordnet ist, sodass die Klappe (14) in der ersten Blockierposition die Leitung (16) blockiert, indem eine Öffnung in der ersten Düse blockiert wird und in der ersten offenen Position die Klappe (14) die Öffnung in der ersten Düse nicht blockiert.

4. Servoventil (10) nach Anspruch 3, umfassend einen zweiten Fluidzuleitungsanschluss (36) in einer Wand der Leitung (16); wobei das Stellglied (26) so konfiguriert ist, dass es die Klappe (14) in einer Richtung orthogonal zu der Längsachse der Klappe (14) zwischen einer zweiten Blockierposition, in der sie die Leitung (16) blockiert, sodass kein Fluid von dem zweiten Fluidzuleitungsanschluss (36) zu dem Fluidrückleitungsanschluss (38) strömen kann, und einer zweiten offenen Position bewegt, in der Fluid von dem zweiten Fluidzuleitungsanschluss (36) zu dem Fluidrückleitungsanschluss (38) strömen kann.

5. Servoventil (10) nach Anspruch 4, umfassend eine zweite Düse, die sich in der Leitung (16) in der Nähe der Klappe (14) befindet, sodass die Klappe (14) in der zweiten Blockierposition die Leitung (16) blockiert, indem eine Öffnung in der zweiten Düse blockiert wird und in der zweiten offenen Position die Klappe (14) die Öffnung in der zweiten Düse nicht blockiert.

6. Servoventil (10) nach Anspruch 5, wobei die Klappe (14) zwischen der ersten und der zweiten Düse (46) angeordnet ist.

7. Servoventil (10) nach einem der vorhergehenden Ansprüche, wobei die Klappe (14) die Leitung (16) in der Gleichgewichtsposition nicht blockiert.

8. Servoventil (10) nach einem der vorhergehenden Ansprüche, wobei das Stellglied (26) eine erste Magnetspule (28) und einen Hebel innerhalb der ersten Magnetspule (28) umfasst, der durch von der ersten Magnetspule (28) erzeugte Magnetfelder bewegbar ist, wenn ein Strom daran angelegt wird, und wobei der Hebel mit der Klappe (14) gekoppelt ist, um die Kraft in der Richtung orthogonal zu der Längsachse der Klappe (14) auszuüben, um die Klappe (14) zu bewegen, wenn der Hebel bewegt wird.

9. Servoventil (10) nach Anspruch 8, wobei das Stellglied (26) eine weitere Magnetspule (28) umfasst, wobei der Hebel innerhalb der weiteren Magnetspule (28) angeordnet ist, um durch von der weiteren Magnetspule (28) erzeugte Magnetfelder bewegbar zu sein, wenn ein Strom daran angelegt wird, um die Kraft in der Richtung orthogonal zu der Längsachse der Klappe (14) auszuüben, um die Klappe (14) zu bewegen, wenn der Hebel bewegt wird.

10. Servoventil (10) nach einem der vorhergehenden Ansprüche, wobei die Klappe (14) elastisch biegbar ist, und wenn die Kraft von dem Stellglied (26) entfernt wird, die Elastizität der Klappe (14) bewirkt, dass die Klappe (14) in die Gleichgewichtsposition zurückkehrt.

11. Verfahren zum Steuern einer Fluidströmung in einem Servoventil (10), umfassend
Bereitstellen des Servoventils (10) nach einem der vorhergehenden Ansprüche; und
Ausüben einer Kraft auf die Klappe (14) in einer Richtung orthogonal zu der Längsachse der Klappe (14), um die Klappe in der Richtung orthogonal zu der Längsachse der Klappe (14) zwischen der ersten Blockierposition und der ersten offenen Position zu bewegen.

## Revendications

1. Servovanne (10) comprenant :
un boîtier (12) ;
le boîtier (12) comprenant
un premier orifice d'alimentation en fluide (34), un orifice de retour de fluide (38) et un conduit (16) entre ceux-ci :
la servovanne (10) comprenant en outre un clapet allongé (14) ayant une partie agencée dans le conduit (16) ; et
un actionneur (26) configuré pour appliquer une force au clapet (14) dans une direction orthogonale à un axe longitudinal du clapet (14) pour déplacer le clapet (14) dans la direction orthogonale à l'axe longitudinal du clapet entre une première position de blocage dans laquelle il bloque le conduit (16) de sorte que le fluide ne peut pas s'écouler du premier orifice d'alimentation en fluide (34) vers l'orifice de retour de fluide (38) et une première position ouverte dans laquelle le conduit (16) est ouvert de sorte que le fluide peut s'écouler du premier orifice d'alimentation en fluide (34) vers l'orifice de retour de fluide (38)
dans laquelle le clapet (14) a une extrémité fixe (18) fixée au boîtier (12) et une extrémité libre (24) opposée à l'extrémité fixe (18), et dans laquelle l'actionneur (26) est configuré pour agir sur une partie du clapet (14) au niveau ou à proximité de l'extrémité libre (24) de manière à déplacer le clapet,
et dans laquelle le clapet (14) est sollicité vers une position d'équilibre,
dans laquelle la force appliquée au clapet (14) amène le clapet à se plier pour se déplacer, **caractérisée en ce que** le clapet (14) est configuré pour bloquer le conduit (16) au niveau d'un emplacement entre l'extrémité fixe (18) et la partie du clapet (14) actionné par l'actionneur (26).

2. Servovanne (10) selon la revendication 1, dans laquelle le clapet (14) s'étend à travers le conduit (16) sensiblement orthogonalement à un axe longitudinal du conduit (16) de sorte que l'axe longitudinal du clapet (14) est sensiblement orthogonal à l'axe longitudinal du conduit (16).

3. Servovanne (10) selon la revendication 1 ou 2, comprenant une première buse située dans le conduit (16) à proximité du clapet (14) de sorte que dans la première position de blocage, le clapet (14) bloque le conduit (16) en bloquant une ouverture dans la première buse, et dans la première position ouverte, le clapet (14) ne bloque pas l'ouverture dans la première buse.

4. Servovanne (10) selon la revendication 3, comprenant un second orifice d'alimentation en fluide (36) dans une paroi du conduit (16) ; dans laquelle l'actionneur (26) est configuré pour déplacer le clapet (14) dans une direction orthogonale à l'axe longitudinal du clapet (14) entre une seconde position de blocage dans laquelle il bloque le conduit (16) de sorte que le fluide ne peut pas s'écouler du second orifice d'alimentation en fluide (36) vers l'orifice de retour de fluide (38) et une seconde position ouverte dans laquelle le fluide peut s'écouler du second orifice d'alimentation en fluide (36) vers l'orifice de retour de fluide (38).

5. Servovanne (10) selon la revendication 4, comprenant une seconde buse située dans le conduit (16) à proximité du clapet (14) de sorte que dans la seconde position de blocage, le clapet (14) bloque le conduit (16) en bloquant une ouverture dans la seconde buse, et dans la seconde position ouverte, le clapet (14) ne bloque pas l'ouverture dans la seconde buse.

6. Servovanne (10) selon la revendication 5, dans laquelle le clapet (14) est agencé entre les première et seconde buses (46).

7. Servovanne (10) selon une quelconque revendication précédente, dans laquelle le clapet (14) ne bloque pas le conduit (16) dans ladite position d'équilibre.

8. Servovanne (10) selon une quelconque revendication précédente, dans laquelle l'actionneur (26) comprend une première bobine de solénoïde (28) et un levier à l'intérieur de la première bobine de solénoïde (28) qui est mobile par des champs magnétiques générés par la première bobine de solénoïde (28) lorsqu'un courant lui est appliqué, et dans laquelle ledit levier est couplé au clapet (14) de manière à appliquer la force dans la direction orthogonale à l'axe longitudinal du clapet (14) pour déplacer le clapet (14) lorsque le levier est déplacé.

9. Servovanne (10) de la revendication 8, dans laquelle l'actionneur (26) comprend une autre bobine de solénoïde (28), dans laquelle le levier est agencé à l'intérieur de l'autre bobine de solénoïde (28) de manière à être mobile par des champs magnétiques générés par l'autre bobine de solénoïde (28) lorsqu'un courant lui est appliqué de manière à appliquer la force dans la direction orthogonale à l'axe longitudinal du clapet (14) pour déplacer le clapet (14) lorsque le levier est déplacé.

10. Servovanne (10) selon une quelconque revendication précédente, dans laquelle le clapet (14) est flexible de manière élastique et lorsque la force de l'actionneur (26) est supprimée, l'élasticité du clapet (14) amène le clapet (14) à revenir à la position d'équilibre.

11. Procédé de commande d'écoulement de fluide dans une servovanne (10), comprenant
la fourniture de la servovanne (10) selon une quelconque revendication précédente ; et
l'application d'une force au clapet (14) dans une direction orthogonale à l'axe longitudinal du clapet (14) pour déplacer le clapet dans la direction orthogonale à l'axe longitudinal du clapet (14) entre la première position de blocage et la première position ouverte.
